# FASCICULE DE BREVET EUROPEEN

(11) **EP 1 275 332 B1**
(45) Date de publication et mention de la délivrance du brevet: **10.08.2005**
(21) Numéro de dépôt: 02356121.0
(22) Date de dépôt: 02.07.2002
(51) Int. Cl.: A47J 27/05

(54) **Elément de cuisson pour enceinte de cuisson à la vapeur**
Kochelement für Kochraum mit Dampf
Cooking element for cooking chamber with steam

(30) Priorité: 13.07.2001 FR 0109404
(43) Date de publication de la demande: 15.01.2003
(73) Titulaire: SEB S.A., 69130 Ecully (FR)
(72) Inventeur: Pretre, Nicolas, 21000 Dijon (FR)
(74) Mandataire: Kiehl, Hubert

(56) Documents cités:
- EP-A- 0 526 141
- WO-A-00/30511
- BE-A- 377 877
- US-A- 2 667 117

## Description

La présente invention se rapporte au domaine technique général des appareils ou ustensiles prévus pour la cuisson à la vapeur.

D'une manière générale, les appareils ou ustensiles prévus pour la cuisson à la vapeur comportent une enceinte de cuisson associée à un réservoir d'eau. L'eau du réservoir est chauffée pour produire la vapeur servant à cuire les aliments contenus dans l'enceinte de cuisson. Les appareils électriques de cuisson à la vapeur comportent un moyen de chauffage électrique pour la production de vapeur à partir de l'eau du réservoir. De tels appareils comportent généralement une base chauffante sur laquelle sont empilés un ou plusieurs éléments de cuisson formant l'enceinte de cuisson.

Le document WO 00/30511 décrit un élément de cuisson composé d'une paroi latérale annulaire et d'un fond perforé amovible. Les parois latérales annulaires sont superposables. Une enceinte de cuisson peut ainsi comporter plusieurs éléments de cuisson superposés, pour cuire simultanément des aliments sur différents fonds superposés, ou encore plusieurs parois latérales annulaires associées à un seul fond, de manière à pouvoir disposer d'un plus grand volume de cuisson, pour cuire par exemple un poulet.

Par rapport aux éléments de cuisson à fond fixe, de tels éléments de cuisson permettent une plus grande latitude d'utilisation, du fait du caractère superposable des parois annulaires et de l'amovibilité des fonds perforés.

Avec de tels éléments de cuisson, il est toutefois difficile de diminuer les contraintes dues au rangement sans affecter le confort d'utilisation lors de la cuisson. En effet, des éléments de cuisson superposables et interchangeables sont d'une utilisation très conviviale, mais présentent l'inconvénient de rester encombrants en toutes circonstances. Des éléments de cuisson superposables gigognes permettent de réduire l'encombrement nécessaire pour le rangement, mais demandent une superposition des éléments de cuisson selon un ordre précis. De plus, le volume de l'enceinte de cuisson ne peut être modulé que dans le sens de la hauteur.

L'objet de la présente invention est d'améliorer les possibilités d'utilisation d'un élément de cuisson pour enceinte de cuisson à la vapeur.

Un objet additionnel de la présente invention est de proposer un élément de cuisson pour enceinte de cuisson à la vapeur, qui permette de limiter l'encombrement nécessaire pour le rangement, et dont la construction permette d'envisager si désiré la superposition de manière interchangeable avec un autre élément de cuisson.

Un autre objet additionnel de la présente invention est de proposer un élément de cuisson pour enceinte de cuisson à la vapeur, qui permette de moduler le volume de cuisson.

Ces objets sont atteints avec un élément de cuisson pour enceinte de cuisson à la vapeur, comportant une paroi latérale annulaire, associée le cas échéant à un ou plusieurs fonds perforés amovibles, du fait que la paroi latérale annulaire présente au moins deux sections transversales mobiles l'une par rapport à l'autre par coulissement et/ou par déformation élastique de la paroi latérale annulaire et/ou par articulation. Par section transversale de la paroi latérale annulaire, on entend une section s'étendant sur toute la hauteur de la paroi latérale annulaire, et non une section s'étendant selon la totalité du périmètre de ladite paroi latérale annulaire. Cette disposition permet de diminuer ou d'augmenter la longueur du périmètre de la paroi latérale annulaire, ou encore de modifier la géométrie de la paroi latérale annulaire. De ce fait, l'élément de cuisson selon l'invention peut, pour le rangement, être notamment disposé à l'intérieur ou autour d'un autre élément de cuisson, cet autre élément de cuisson pouvant être superposable et interchangeable avec l'élément de cuisson selon l'invention. Le gain d'encombrement en hauteur est très important, alors que le volume latéral additionnel nécessaire pour le rangement est limité, voire nul. En outre, l'association de la paroi latérale annulaire avec des fonds amovibles de taille différente permet de moduler le volume de l'enceinte de cuisson dans le sens de la longueur et/ou de la largeur, et non dans le sens de la hauteur.

Avantageusement, la paroi latérale annulaire comporte une portion longitudinale flexible, cette disposition permettant de simplifier la réalisation de l'élément de cuisson tout en facilitant la tenue de l'élément de cuisson lors de la cuisson. La portion longitudinale flexible de la paroi latérale s'étend sur au moins une partie du périmètre de la paroi latérale, sur toute la hauteur de la paroi latérale.

Avantageusement alors, la portion longitudinale flexible s'étend sur plus de la moitié de la circonférence de la paroi latérale annulaire. Cette disposition permet d'utiliser des matériaux plus rigides pour la paroi latérale annulaire.

Selon un premier mode de réalisation, au moins deux des sections transversales coulissent longitudinalement l'une par rapport à l'autre. Cette disposition présente notamment l'avantage de permettre plusieurs positions d'utilisation pour la cuisson. Plusieurs fonds amovibles adaptés à la configuration des différentes positions de cuisson de la paroi latérale peuvent alors être prévus. De plus, l'épaisseur des fonds pouvant être très réduite, ceux-ci sont peu encombrants.

Selon une forme de réalisation préférée, l'une desdites sections transversales forme une chambre dans laquelle coulisse l'autre desdites sections transversales. Cette disposition permet de faciliter le guidage.

Avantageusement alors, la chambre présente une ouverture supérieure ainsi qu'une ouverture inférieure. La chambre peut ainsi former un conduit pour le passage de vapeur. De préférence la chambre s'étend alors sur toute la hauteur de la paroi latérale annulaire.

Avantageusement encore, pour faciliter la réalisation de la paroi latérale annulaire, lesdites sections transversales sont issues d'au moins deux pièces différentes. Ces pièces peuvent être assemblées de manière démontable ou non.

Selon un deuxième mode de réalisation, la paroi latérale annulaire présente une zone réalisée en matériau souple et/ou élastiquement déformable, s'étendant sur la hauteur de la paroi latérale annulaire, au moins deux des sections transversales étant disposées de part et d'autre de ladite zone. La zone réalisée en matériau souple et/ou élastiquement déformable peut notamment être associée à une portion longitudinale flexible, ou à une portion longitudinale articulée de la paroi latérale annulaire.

Selon un troisième mode de réalisation, au moins deux des sections transversales présentent l'une par rapport à l'autre au moins une articulation. La paroi latérale annulaire peut par exemple comporter deux sections transversales présentant chacune deux articulations avec l'autre section. La paroi latérale annulaire est alors fermée. La paroi latérale annulaire peut aussi comporter deux sections transversales présentant chacune une seule articulation avec l'autre section. La paroi latérale annulaire est alors ouverte, chacune des sections présentant un bord latéral libre.

Selon une première forme de réalisation la ou l'une au moins des articulations est formée par une zone amincie de la paroi latérale. La paroi latérale peut par exemple être obtenue par moulage d'une pièce en polypropylène, ce qui permet de réaliser un élément de cuisson très économique.

Selon une deuxième forme de réalisation, la ou l'une au moins des articulations présente une partie convexe tournant dans une partie concave. Les pièces formant la paroi latérale peuvent également être obtenues par moulage.

Selon une troisième forme de réalisation, la ou l'une au moins des articulations présente un axe assemblant lesdites sections transversales. Si désiré, l'axe peut être démontable.

Les articulations ne pivotent pas nécessairement autour d'une direction parallèle à la paroi latérale mais peuvent par exemple pivoter par rapport à une direction radiale par rapport à la paroi latérale.

L'invention sera mieux comprise à l'étude d'exemples de réalisation, pris à titre nullement limitatif, illustrés dans les figures annexées dans lesquelles :
- la figure 1 est une vue montrant deux éléments de cuisson superposés selon un premier exemple de réalisation de l'invention,
- la figure 2 est une vue partielle d'un élément de cuisson selon un deuxième exemple de réalisation de l'invention,
- la figure 3 est une vue partielle d'un élément de cuisson selon un troisième exemple de réalisation de l'invention,
- les figures 4 et 5 sont deux vues partielles d'un élément de cuisson selon un quatrième exemple de réalisation de l'invention,
- la figure 6 est une vue partielle d'un élément de cuisson selon un cinquième exemple de réalisation de l'invention,
- la figure 7 est une vue partielle d'un élément de cuisson selon un sixième exemple de réalisation de l'invention.

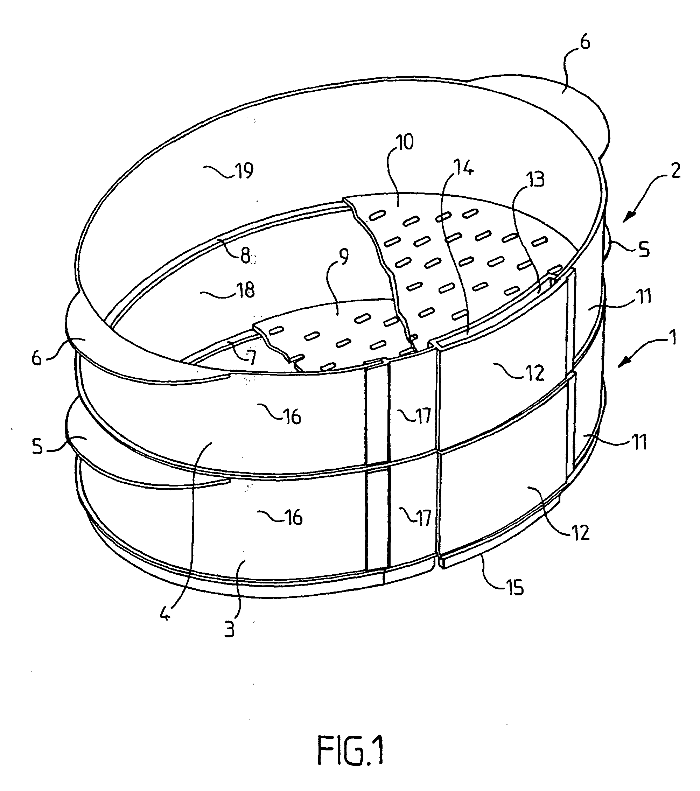

La figure 1 montre un premier exemple de réalisation de l'invention. Deux récipients de cuisson 1, 2 superposés forment une partie d'une enceinte de cuisson à la vapeur. Les deux récipients 1, 2 sont interchangeables. Chaque récipient de cuisson comporte une paroi latérale annulaire 3, 4 munie d'organes de préhension 5, 6. Un rebord annulaire 7, 8 ménagé sur la face intérieure de la paroi latérale annulaire 3, 4 forme un support pour un fond perforé amovible 9, 10.

Chaque paroi latérale annulaire 3, 4 forme un anneau brisé et présente deux sections transversales 11, 12 coulissant longitudinalement l'une par rapport à l'autre grâce à une déformation élastique de la paroi annulaire. L'une 12 des sections transversales forme une chambre 13 dans laquelle coulisse l'autre section transversale 11. Chaque chambre 13 présente une ouverture supérieure 14 et une ouverture inférieure ménagée derrière un bord inférieur 15. Les parois latérales 3, 4 sont légèrement coniques, de manière à ce que le rebord 15 du récipient supérieur 2 puisse s'engager dans l'ouverture 14 du récipient inférieur 1. Les deux chambres 13 forment alors un conduit permettant par exemple le passage de vapeur.

La section transversale 11 présente une extrémité s'engageant dans la chambre 13 de l'élément de cuisson. La section transversale 11 appartient à une pièce 16 formant plus de la moitié de la circonférence de l'élément de cuisson. L'extrémité libre de la pièce 16 opposée à la section transversale 11 est assemblée avec une autre pièce 17 dans laquelle est ménagée la chambre 13. L'assemblage des pièces 16 et 17 est de préférence non démontable.

Chaque paroi latérale annulaire 3, 4 forme un élément de cuisson pour une enceinte de cuisson à la vapeur. Chacune des pièces 16 forme une portion longitudinale flexible 18, 19 de la paroi latérale 3, 4. Plusieurs parois latérales 3, 4 superposées peuvent être associées à un seul fond perforé pour former une enceinte de cuisson d'un plus grand volume.

Pour ranger les éléments de cuisson en limitant leur encombrement, l'utilisateur retire le fond amovible 9 ou 10 de l'une des parois latérales 3 ou 4, et insère la section transversale 11 dans la chambre 13 grâce à la flexibilité de la portion longitudinale 18 ou 19, réduisant ainsi le périmètre de ladite paroi latérale. La paroi latérale dont le périmètre est réduit peut ainsi prendre place à l'intérieur de l'autre paroi latérale. Plusieurs parois latérales peuvent ainsi être emboîtées.

L'utilisateur peut également associer aux parois latérales 3 ou 4 des fonds amovibles d'une taille inférieure aux fonds 9 ou 10, afin d'obtenir un élément de cuisson d'un périmètre plus réduit.

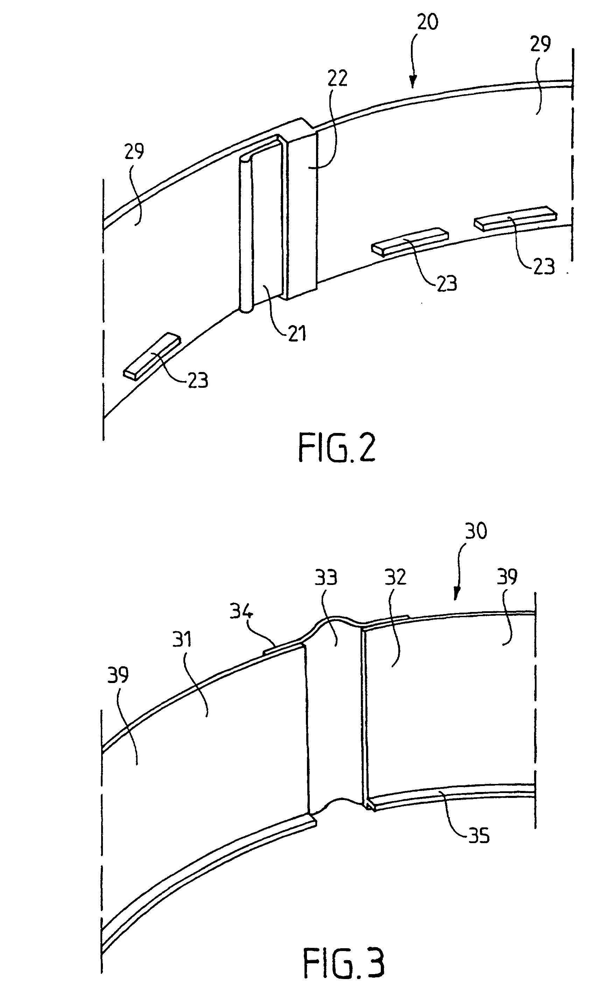

La figure 2 présente une variante de l'exemple de réalisation montré à la figure 1. L'élément de cuisson comporte une paroi latérale annulaire 20 présentant une section transversale 21 coulissant dans une section transversale 22 formant une gâchette. La face interne de la paroi latérale annulaire 20 comporte également des supports 23 prévus pour recevoir un fond amovible perforé. Les sections transversales 21, 22 sont réunies par une portion longitudinale flexible 29 pour former la paroi latérale annulaire 20.

A titre de variante complémentaire, le périmètre de la paroi latérale en position de cuisson peut être plus petit que le périmètre de la paroi latérale en position de rangement. La paroi latérale de l'élément de cuisson peut alors être disposée autour d'un autre ustensile, tel que par exemple un élément de cuisson à fond amovible tel que décrit dans le document WO 00/30511, ou un élément de cuisson à fond non amovible, ou une base chauffante décrite dans le document WO 00/30510.

A titre de variante complémentaire, deux zones de coulissement telles que la chambre 13 ou la gâchette de la section 22, par exemple diamétralement opposées, permettent de faciliter l'extension ou la contraction du périmètre de la paroi latérale. De préférence les zones de coulissement sont alors ménagées dans des portions rectilignes de la paroi latérale.

La figure 3 présente un troisième exemple de réalisation dans lequel l'élément de cuisson comporte une paroi latérale annulaire 30 présentant une zone 33, réalisée en matériau souple, s'étendant sur la hauteur de la paroi annulaire 30. La zone 33 peut être formée par une pièce 34 fixée aux sections transversales 31, 32. Les sections transversales 31, 32 appartiennent à une portion longitudinale flexible 39 comportant dans la partie inférieure de la face interne une nervure 35 prévue pour supporter un fond perforé amovible. De manière avantageuse, la portion longitudinale flexible 39 tend à ramener les sections transversales 31, 32 en position jointive.

A titre de variante, la zone 33 peut être réalisée en matériau élastiquement déformable, par exemple en matériau flexible et/ou en matériau extensible. A titre de variante, les sections transversales 31, 32 peuvent être reliées par une portion longitudinale flexible ou articulée de la paroi annulaire 30.

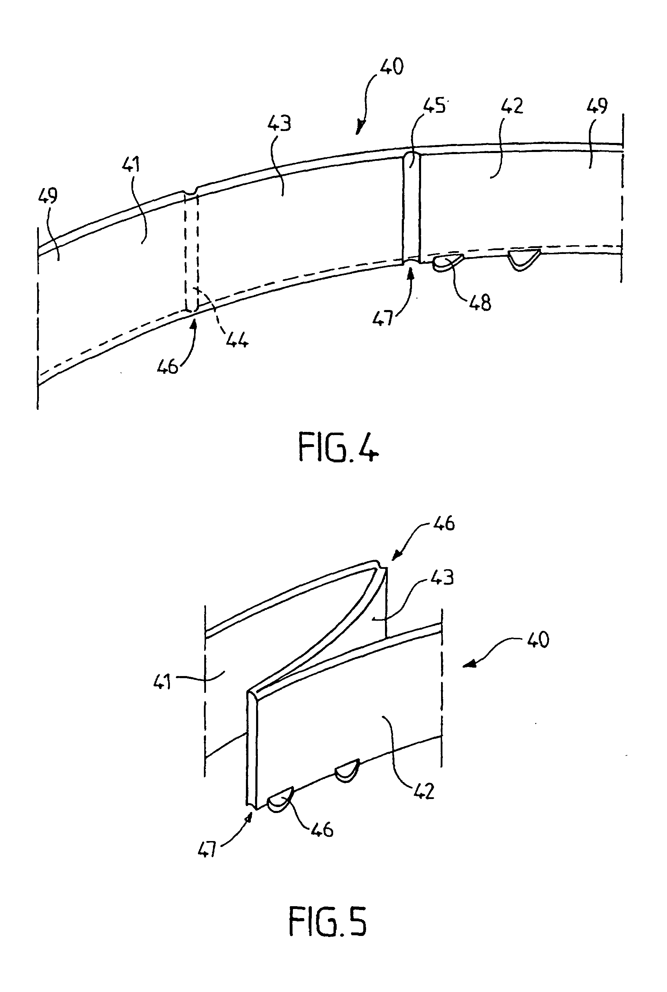

La figure 4 présente un quatrième exemple de réalisation dans lequel l'élément de cuisson comporte une paroi latérale annulaire 40 présentant une première zone amincie 44 ménagée sur la face externe et une deuxième zone amincie 45 ménagée sur la face interne. Les deux zones amincies 44, 45 s'étendent sur toute la hauteur de la paroi latérale 40. La paroi latérale 40 peut notamment être réalisée en polypropylène.

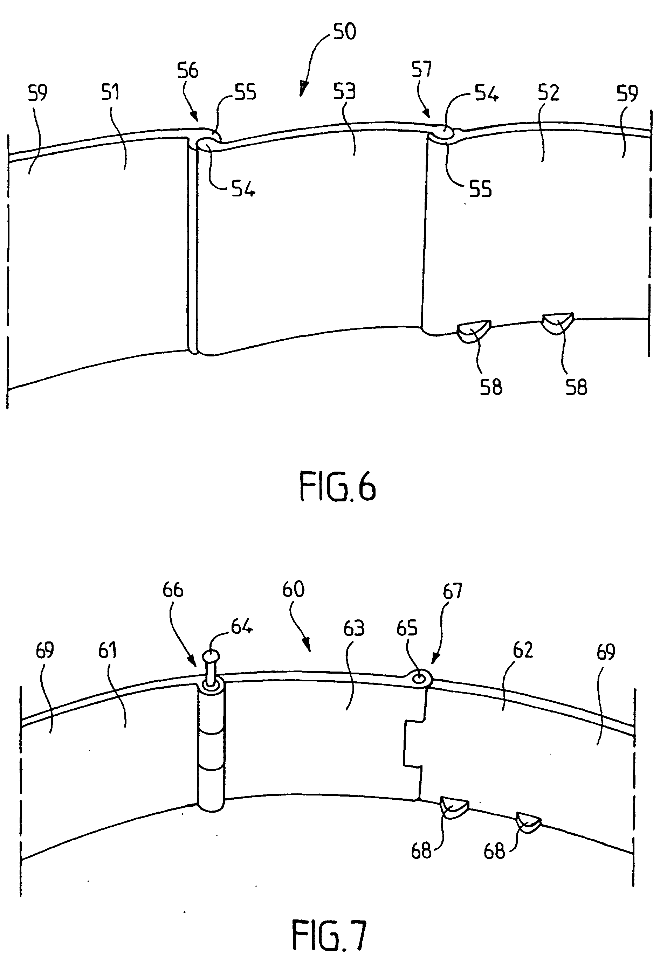

Les deux zones amincies 44, 45 forment ainsi deux articulations 46, 47. La paroi annulaire 40 présente un montant 43 encadré par les articulations 46, 47. Le montant 43 est susceptible de pivoter par rapport aux sections transversales 41, 42 adjacentes aux articulations 46, 47, tel que montré à la figure 5. Les sections transversales 41, 42 sont reliées par une portion longitudinale flexible 49 comportant dans la partie inférieure de la face interne des ergots 48 prévus pour supporter un fond perforé amovible.

L'exemple de réalisation montré à la figure 6 diffère de l'exemple de réalisation précédent en ce que les articulations 56, 57 sont formées par les bords latéraux du montant 53 pivotant dans les bords latéraux des sections transversales 51, 52. Les bords latéraux du montant 53 forment les parties convexes 54 des articulations 56, 57 et les bords latéraux des sections transversales 51, 52 forment les parties concaves 55 des articulations 56, 57. Les sections transversales 51, 52 sont réunies par une portion longitudinale flexible 59 comportant dans la partie inférieure de la face interne des ergots 58 prévus pour supporter un fond perforé amovible.

L'exemple de réalisation montré à la figure 7 diffère de l'exemple de réalisation précédent en ce que les articulations 66, 67 sont formées par des charnières. Un axe 64, représenté sorti en partie à la figure 7, permet de solidariser la section transversale 61 et le montant 63, en autorisant leur rotation. Un autre axe 65 permet de solidariser la section transversale 62 et le montant 63, en autorisant leur rotation. Les sections transversales 61, 62 sont réunies par une portion longitudinale flexible 69 comportant dans la partie inférieure de la face interne des ergots 68 prévus pour supporter un fond perforé amovible.

A titre de variante pour le quatrième, le cinquième et le sixième exemple de réalisation, la paroi latérale annulaire peut comporter deux pièces réunies par une articulation, l'un des bords latéraux de chaque pièce appartenant à l'articulation, l'autre bord latéral de chaque pièce pouvant être rapproché ou éloigné de l'autre bord latéral de l'autre pièce par pivotement des pièces. La paroi latérale annulaire ne comporte alors pas nécessairement de portion longitudinale flexible.

La présente invention n'est nullement limitée aux exemples de réalisation décrits et à leurs variantes, mais englobe de nombreuses modifications dans le cadre des revendications.

A titre de variantes complémentaires, la paroi latérale annulaire peut comporter plusieurs portions longitudinales flexibles. Les fonds amovibles peuvent comporter une ou plusieurs pièces. Si désiré, un élément de cuisson selon l'invention peut être associé par superposition à un autre élément de cuisson selon l'invention, et/ou à un élément de cuisson dans lequel la géométrie de la paroi latérale annulaire ne peut être modifiée, par exemple à un récipient de cuisson comprenant un fond perforé solidaire de la paroi latérale annulaire.

## Revendications

1. Elément de cuisson pour enceinte de cuisson à la vapeur, comportant une paroi latérale annulaire (3 ; 4 ; 20 ; 30 ; 40 ; 50 ; 60), associée le cas échéant à un ou plusieurs fonds perforés amovibles (9 ; 10), **caractérisé en ce que** la paroi latérale annulaire (3 ; 4 ; 20 ; 30 ; 40 ; 50 ; 60) présente au moins deux sections transversales (11, 12 ; 21, 22 ; 31, 32 ; 41, 42 ; 51, 52 ; 61, 62) mobiles l'une par rapport à l'autre par coulissement et/ou par déformation élastique de la paroi latérale annulaire et/ou par articulation.

2. Elément de cuisson selon la revendication 1, **caractérisé en ce que** la paroi latérale annulaire (3 ; 4 ; 20 ; 30 ; 40 ; 50 ; 60) comporte une portion longitudinale flexible (18 ; 19 ; 29 ; 39 ; 49 ; 59 ; 69).

3. Elément de cuisson selon la revendication 2, **caractérisé en ce que** la portion longitudinale flexible (18 ; 19 ; 29 ; 39 ; 49 ; 59 ; 69) s'étend sur plus de la moitié de la circonférence de la paroi latérale annulaire (3 ; 4 ; 20 ; 30 ; 40 ; 50 ; 60).

4. Elément de cuisson selon l'une des revendications 1 à 3, **caractérisé en ce qu'**au moins deux (11, 12 ; 21, 22) des sections transversales coulissent longitudinalement l'une (11 ; 21) par rapport à l'autre (12 ; 22).

5. Elément de cuisson selon la revendication 4, **caractérisé en ce que** l'une (12 ; 22) desdites sections transversales forme une chambre (13 ; 23) dans laquelle coulisse l'autre (11 ; 21) desdites sections transversales.

6. Elément de cuisson selon la revendication 5, **caractérisé en ce que** la chambre (13) présente une ouverture supérieure (14) ainsi qu'une ouverture inférieure (15).

7. Elément de cuisson selon l'une des revendications 4 à 6, **caractérisé en ce que** lesdites sections transversales (11, 12) sont issues d'au moins deux pièces différentes (16, 17).

8. Elément de cuisson selon l'une des revendications 1 à 3, **caractérisé en ce que** la paroi latérale annulaire (30) présente une zone (33), réalisée en matériau souple et/ou élastiquement déformable, s'étendant sur la hauteur de la paroi latérale annulaire (30), au moins deux (31, 32) des sections transversales étant disposées de part et d'autre de ladite zone (33).

9. Elément de cuisson selon l'une des revendications 1 à 3, **caractérisé en ce qu'**au moins deux (41, 43 ; 42, 43 ; 51, 53 ; 52, 53 ; 61, 63 ; 62, 63) des sections transversales présentent l'une par rapport à l'autre au moins une articulation (46 ; 47 ; 56 ; 57 ; 66 ; 67).

10. Elément de cuisson selon la revendication 9, **caractérisé en ce que** la ou l'une au moins des articulations (46 ; 47) est formée par une zone amincie (43 ; 44) de la paroi latérale (40).

11. Elément de cuisson selon la revendication 9, **caractérisé en ce que** la ou l'une au moins des articulations (56 ; 57) présente une partie convexe (54) tournant dans une partie concave (55).

12. Elément de cuisson selon la revendication 9, **caractérisé en ce que** la ou l'une au moins l'une des articulations (66 ; 67) présente un axe (64 ; 65) assemblant lesdites sections transversales (61, 63 ; 62, 63).

## Claims

1. A cooking element for a steaming enclosure, which cooking element is made up of an annular side wall (3; 4; 20; 30; 40; 50; 60) optionally associated with one or more removable perforated bottom walls (9; 10), said cooking element being **characterized in that** the annular side wall (3; 4; 20; 30; 40; 50; 60) has at least two transverse segments (11, 12; 21; 22; 31, 32; 41, 42; 51, 52; 61, 62) that are mounted to move one relative to the other by sliding and/or by elastic deformation of the annular side wall and/or by hinging.

2. A cooking element according to claim 1, **characterized in that** the annular side wall (3; 4; 20; 30; 40; 50; 60) includes a flexible longitudinal portion (18; 19; 29; 39; 49; 59; 69).

3. A cooking element according to claim 2, **characterized in that** the flexible longitudinal portion (18; 19; 29; 39; 49; 59; 69) extends over more than one half of the circumference of the annular side wall (3; 4; 20; 30; 40; 50; 60).

4. A cooking element according to any one of claims 1 to 3, **characterized in that** at least two (11, 12; 21, 22) of the transverse segments slide longitudinally one (11; 21) relative to the other (12; 22).

5. A cooking element according to claim 4, **characterized in that** one (12; 22) of said transverse segments forms a chamber (13; 23) in which the other (11; 21) of said transverse segments is slidably received.

6. A cooking element according to claim 5, **characterized in that** the chamber (13) has a top opening (14) and a bottom opening (15).

7. A cooking element according to any one of claims 4 to 6, **characterized in that** said transverse segments (11, 12) come from at least two different parts (16, 17).

8. A cooking element according to any one of claims 1 to 3, **characterized in that** the annular side wall (30) has a zone (33) that is made of a flexible and/or elastically deformable material, extending over a height of the annular side wall (30), at least two (31, 32) of the transverse segments being disposed on either side of said zone (33).

9. A cooking element according to any one of claims 1 to 3, **characterized in that** at least two (41, 43; 42, 43; 51, 53; 52, 53; 61, 63; 62, 63) of the transverse segments has a hinge (46; 47; 56; 57; 66; 67) for hinging one relative to the other.

10. A cooking element according to claim 9, **characterized in that** the hinge or at least one of the hinges (46; 47) is formed by a thin zone (43; 44) of the side wall (40).

11. A cooking element according to claim 9, **characterized in that** the hinge or at least one of the hinges (56; 57) has a convex portion (54) mounted to turn in a concave portion (55).

12. A cooking element according to claim 9, **characterized in that** the hinge or at least one of the hinges (66; 67) has a hinge pin (64; 65) for assembling said transverse segments (61, 63; 62, 63) together.

## Patentansprüche

1. Garelement für einen Raum zum Garen mit Dampf, mit einer ringförmigen Seitenwand (3; 4; 20; 30; 40; 50; 60), die gegebenenfalls einem oder mehreren abnehmbaren, durchlöcherten Böden (9; 10) zugeordnet ist, **dadurch gekennzeichnet, dass** die ringförmige Seitenwand (3; 4; 20; 30; 40; 50; 60) mindestens zwei Querschnitte (11, 12; 21, 22; 31, 32; 41, 42; 51, 52; 61, 62) aufweist, die durch Gleiten und/oder durch elastische Verformung der ringförmigen Seitenwand und/oder durch Anlenkung zueinander beweglich sind.

2. Garelement nach Anspruch 1, **dadurch gekennzeichnet, dass** die ringförmige Seitenwand (3; 4; 20; 30; 40; 50; 60) einen nachgiebigen Längsabschnitt (18; 19; 29; 39; 49; 59; 69) aufweist.

3. Garelement nach Anspruch 2, **dadurch gekennzeichnet, dass** sich der nachgiebige Längsabschnitt (18; 19; 29; 39; 49; 59; 69) über mehr als die Hälfte des Umfangs der ringförmigen Seitenwand (3; 4; 20; 30; 40; 50; 60) erstreckt.

4. Garelement nach einem der Ansprüche 1 bis 3, **dadurch gekennzeichnet, dass** mindestens zwei (11, 12; 21, 22) der Querschnitte der Länge nach zueinander gleiten, wobei einer (11; 21) dieser Querschnitte bezüglich des anderen (12; 22) gleitet.

5. Garelement nach Anspruch 4, **dadurch gekennzeichnet, dass** einer (12; 22) der Querschnitte eine Kammer (13; 23) bildet, in welcher der andere (11; 21) der Querschnitte gleitet.

6. Garelement nach Anspruch 5, **dadurch gekennzeichnet, dass** die Kammer (13) eine obere Öffnung (14) sowie eine untere Öffnung (15) aufweist.

7. Garelement nach einem der Ansprüche 4 bis 6, **dadurch gekennzeichnet, dass** die Querschnitte (11, 12) aus mindestens zwei verschiedenen Teilen (16, 17) hervorgehen.

8. Garelement nach einem der Ansprüche 1 bis 3, **dadurch gekennzeichnet, dass** die ringförmige Seitenwand (30) einen Bereich (33) aufweist, der aus flexiblem und/oder elastisch verformbarem Material hergestellt ist und sich über die Höhe der ringförmigen Seitenwand (30) erstreckt, wobei mindestens zwei (31, 32) der Querschnitte auf der einen und der anderen Seite des Bereichs (33) angeordnet sind.

9. Garelement nach einem der Ansprüche 1 bis 3, **dadurch gekennzeichnet, dass** mindestens zwei (41, 43; 42, 43; 51, 53; 52, 53; 61, 63; 62, 63) der Querschnitte zueinander mindestens ein Gelenk (46; 47; 56; 57; 66; 67) aufweisen.

10. Garelement nach Anspruch 9, **dadurch gekennzeichnet, dass** das Gelenk oder mindestens eines der Gelenke (46; 47) durch einen verdünnten Bereich (43; 44) der Seitenwand (40) gebildet ist.

11. Garelement nach Anspruch 9, **dadurch gekennzeichnet, dass** das Gelenk oder mindestens eines der Gelenke (56; 57) einen konvexen Abschnitt (54) aufweist, der in einem konkaven Abschnitt (55) dreht.

12. Garelement nach Anspruch 9, **dadurch gekennzeichnet, dass** das Gelenk oder mindestens eines der Gelenke (66; 67) einen Zapfen (64; 65) aufweist, der die Querschnitte (61, 63; 62, 63) zusammenfügt.
